(19) Europäisches Patentamt / European Patent Office / Office européen des brevets

(11) **EP 4 451 181 A1**

(12) **EUROPEAN PATENT APPLICATION**

(43) Date of publication:
**23.10.2024 Bulletin 2024/43**

(21) Application number: **23305613.4**

(22) Date of filing: **20.04.2023**

(51) International Patent Classification (IPC):
*G06N 10/60* $^{(2022.01)}$

(52) Cooperative Patent Classification (CPC):
**G06N 10/60; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Pasqal S.A.S.**
  **91300 Massy (FR)**
• **Qubit Pharmaceuticals S.A.S.**
  **75014 Paris (FR)**
• **SORBONNE UNIVERSITE**
  **75006 Paris (FR)**
• **Centre National de la Recherche Scientifique**
  **75016 Paris (FR)**

(72) Inventors:
• **PIQUEMAL, Jean-Philip**
  **75052 Paris (FR)**
• **LOCO, Daniele**
  **75014 Paris (FR)**
• **GOURAUD, Nicolaï**
  **75014 Paris (FR)**
• **d'ARCANGELO, Mauro**
  **91300 MASSY (FR)**
• **HENRY, Louis-Paul**
  **91300 MASSY (FR)**

(74) Representative: **De Vries & Metman**
  **Overschiestraat 180**
  **1062 XK Amsterdam (NL)**

(54) **APPROXIMATING A DENSITY FUNCTION BASED ON A GAUSSIAN MIXTURE USING A QUANTUM COMPUTER**

(57) Methods and system for approximating a density function using a quantum computer are described, wherein the method comprises the steps of encoding a problem of approximating a desity function based on a mixture of components into a problem Hamiltonian, the encoding including mapping the density distribution onto a plurality of qubits of the quantum computer, each qubit being associated with a location in the density distribution and defining a possible location of a component of the mixture; computing parameters for generating one or more control signals for configuring the quantum computer in a state of the problem Hamiltonian; evolving the qubits of the quantum computer based on the control signals and measuring the state of the quantum computer; and, determining one or more candidate locations for the components based on the measured state.

encoding a Gaussian mixture approximation problem into a problem Hamiltonian by mapping a density function that needs to be approximated onto a plurality of qubits forming a quantum register, each qubit defining a possible mean of a Gaussian in the mixture — 202

computing parameters for generating pulse signals for configuring the quantum register in a ground state of an initial Hamiltonian and for evolving the ground state of an initial Hamiltonian to a ground state of the problem Hamiltonian — 204

preparing the quantum register in a ground state of the initial Hamiltonian and evolving the ground state of the initial Hamiltonian to the ground state of the problem Hamiltonian based on the pulse signals — 206

measuring the state of the qubits of the quantum processor and storing the measurements — 208

determining an approximation of the ground state of the problem Hamiltonian based on the measured state and determining the Gaussians forming the mixture based on the approximated ground state — 210

Fig. 2

**Description**

Technical field

The disclosure relates to approximating a density function based on a Gaussian mixture using a quantum computer, and in particular, though not exclusively, to methods and systems for approximating a density function based on a Gaussian mixture using a quantum computer and a computer program product for executing such methods.

Background

A Gaussian mixture model is a probabilistic model which assumes that the distribution of data can be estimated by a mixture of a finite number of normal distributions with unknown parameters. Each Gaussian in the mixture is referred to as a component. A Gaussian mixture model may be used as a universal approximator of a continuous density function in the sense that any smooth density can be approximated by a Gaussian mixture model having a predetermined number of components. An algorithm that can be used to address this problem is the so-called Expectation-Maximitazion algorithm, which has limited guarantees of convergency and in general only finds a locally optimal solution and not a global optimal solution

In the article by Dasgupta, Learning mixtures of Gaussians, 40th annual symposium on foundations of computer science, 17-19 October 1999, New York, describes a scheme that exhibits improved performance compared to the Expectation-Maximitazion algorithm. In this scheme data is projected onto a lower dimensional space in which the reduced problem is solved. Data from several projections may be aggregated to obtain an estimate of the parameter in the original space. Further improvements and refinements were introduced, but all of them were based on the concept of lower-dimensional projection.

Although these methods can deal with mixtures in high-dimensional spaces, and are not necessarily restricted to Gaussian mixtures, a substantial disadvantage of all of these methods is that they require the number of components in the mixture to be given as input data. No prior knowledge regarding the number of components in the mixture makes the problem of approximating a density function, especially a high dimensional density function, a higly computationally complex problem. Hence, from the above it follows that there is a need in the art for improved methods and systems for approximating a density function based on a Gaussian mixture.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments in this disclosure aim to provide methods and systems for approximating a target density function based on a mixture model, such as Gaussian mixture, using a quantum computer. The distributions building the mixture are referred to as the components. The inventors suprisingly found that the problem of finding a mixture approximation of density function, such as a scalar map, may be transposed into an Ising model and mapped onto qubits of a quantum register, wherein the qubits may define possible locations for the means of the mixture of model distributions, such as mixture of Gaussians. The embodiments include annealing schemes and quantum variational algorithms for finding a mixture approximation of density function.

Some of the embodiments relate to finding a Gaussian mixture approximation of a scalar map. This problem can be recast into an Ising model and mapped onto a plurality of qubits of a quantum register. In some embodiments, the plurality of qubits may form a spatial arrangement, e.g. a (square, triangular, ...) array, of qubits. The embodiments are not necessarily restricted to Gaussian mixtures but are also suitable to mixtures of an arbitrary distributions, including but not limited to a Lorentzian distribution or a radial basis density function.

In an aspect, the embodiments relate to a method for approximating a density function using a quantum computer. The method may include encoding a problem of approximating a desity function based on a mixture of components into a problem Hamiltonian. In an embodiment, the encoding may include mapping the density distribution onto a plurality of qubits of the quantum computer. In an embodiment, a qubit may be associated with a location in the density distribution and defining a possible location for the mean of a component of the mixture. The method may further include computing parameters for generating one or more control signals for configuring the quantum computer in a state of the problem Hamiltonian and evolving the qubits of the quantum computer based on the control signals and measuring the state of the quantum computer. The method may also include determining one or more candidate location of the mean of each component based on the measured state.

In an embodment, the plurality of qubits may include a spatial arrangement of qubits. In an embodiment, the plurality of qubits may include an 1D, 2D or 3D spatial arrangement of qubits.

In an embodiment, a component may be a distribution model. In an embodiment, the distribution model may be at least one of: a Gaussian distribution, Lorentzian distribution, a radial basis function, a isotropic model distribution function or anisotropic model distribution function

In an embodiment, the one or more control signals may be configured to set the quantum computer in an initial state and to evolve the initial state towards a final state, preferably a ground state or a low-energy state of the problem Hamiltonian.

In an embodiment, the problem Hamiltonian may be an Ising-type Hamiltonian or a Hamiltonian that approximates an Ising-type Hamiltonian.

In an embodiment, the method may further include: constructing a distribution model, the construction including assigning a model distribution function to each of the one or more candidate positions; determining a similarity measure between the density distribution and the distribution model; optimizing the one or more candidate location of the mean of each component based on the similarity measure by updating the pulse parameters, evolve the qubits based on the updated parameters and measuring one or more updated candidate location of the means.

In an embodiment, a density function may relate to a density function determined by crystallographic measurements or a density function determined by tomographic imaging methods, for example CT-scans, or crystallographic measurements, for example X-ray diffraction or Nuclear Magnetic Resonance (NMR).

In an embodiment, a qubit may be associated with a first state indictive of no presence of a component and a second state indicative of the presence of a component.

In an embodiment, the qubits may be atomic qubits. In an embodiment, an atomic qubit in a Rydberg state may indicate a position of component; and/or, wherein the problem Hamiltonian is a Rydberg Hamiltonian.

In an embodiment, the control signals may be one or more laser pulses. In an embodiment, one or more local laser pulses may be configured to individually address an atomic qubit. In an embodiment, one or more global pulses may be configured to collectively addressing a plurality of atomic qubits of the quantum computer.

In an embodiment, the method may comprise: measuring the state of the atomic qubits in the computational basis using an imaging system. In an embodiment, the measured state of the atomic qubits may form a bitstring for encoding the one or more candidate locations.

In an embodiment, the evolution of the qubits of the quantum computer may be based on a quantum annealing scheme or based on a variational quantum algorithm.

In a further aspect, the invention may relate to a hybrid computing system for approximating a density function comprising a quantum computer comprising a plurality of qubits, preferably a spatial arrangement of atomic qubits, forming a quantum register and a classical computer.

In an embodiment, the system may be configured to perform the steps of: encoding a problem of approximating a density function based on a mixture of components into a problem Hamiltonian, the encoding including mapping the density distribution onto a plurality of qubits of the quantum computer, each qubit being associated with a location in the density distribution and defining a possible location of the mean of each component of the mixture; computing parameters for generating one or more control signals for configuring the quantum computer in a state of the problem Hamiltonian; evolving the qubits of the quantum computer based on the control signals and measuring the state of the quantum computer; and, determining one or more candidate location of the mean of each component based on the measured state.

In further embodiment, the hybrid computing system may be further configured to perform any of the steps as described above.

The invention may also relate to a computer program or suite of computer programs comprising at least one software code portion the software code portion, when run on a hybrid computing system comprising a plurality of qubits, preferably a spatial arrangement of atomic qubits, forming a quantum register and a classical computer, being configured for executing the method steps according any of the above-described claims.

Brief Description of the drawings

Fig. 1A-1C depict examples of density functions;
Fig. 2 depicts a method for approximating a density function based on a Gaussian mixture according to an embodiment;
Fig. 3 depicts an example of a density function that can be approximated by two Gaussians;
Fig. 4 depicts the mapping of a density function onto a spatial arrangement of qubits;
Fig. 5 depicts a histogram of states that were measured using a quantum annealing scheme;

**Fig. 6** depicts a Gaussian mixture that approximates the density fiunction;

**Fig. 7** depicts a method for approximating a density function based on a Gaussian mixture according to another embodiment;

**Fig. 8** schematically depicts mapping regions of a 2D density function onto a 2D lattice of neutral atoms of a quantum register;

**Fig. 9** schematically depicts construction of a density function based on Gaussians placed around excited atoms of a trial state of the quantum processor.

**Fig. 10A** and **10B** depict density functions and locations of water molecules obtained using a variational algorithm according to an embodiment;

**Fig. 11** depicts a histogram of states that were sampled during the execution of the variational algorithm;

**Fig. 12** depicts a hybrid computer system comprising a classical computer and a quantum processor;

**Fig. 13** schematically describes an example of a neutral atom quantum processor;

**Fig. 14A-14D** depict implementations of quantum spin models using neutral atoms.

Description of the embodiments

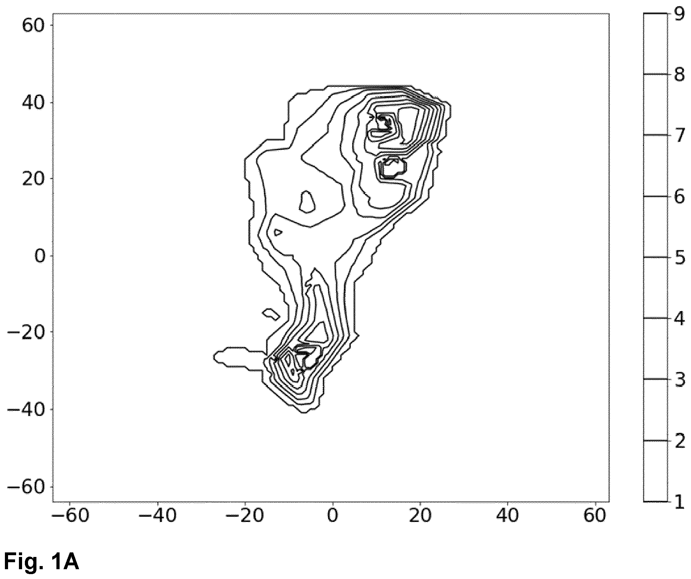

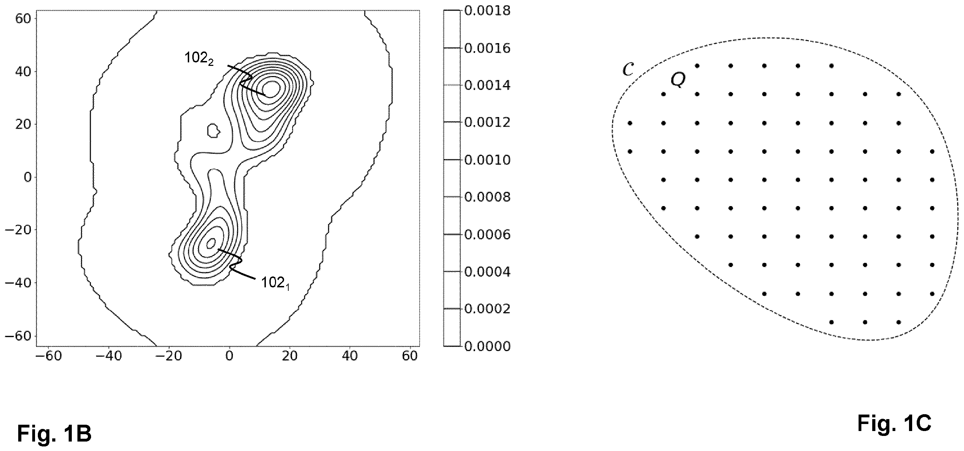

The embodiments in this disclosure relate methods and system for approximating a density function based on a Gaussian mixture using a quantum computer. An example of such density functions are depicted in **Fig. 1A** and **1B.** These figures depict an example of a probability density of oxygen atoms (signalling the presence of water molecules) in a cavity of a protein. In particular, the figures depict a 2D density function of a cavity of a protein MUP1, which is known to have just two water molecules inside. This density function is computed based on the 3D-RISM (Reference Interaction Site Model). A density function however may also be determined experimentally. For example, a density function may be determined based on crystallographic measurements, for example X-Ray crystallography of electron densities, of a hydrated protein. It is customary to apply a Laplacian of Gaussian (LoG) filter to the densities to smooth them out and emphasize the maximum density values $102_{1,2}$ in a filtered density as shown in **Fig. 1B.**

The exact locations of the molecules typically do not coincide with the maximum density values. Moreover, without prior knowledge about the exact number of water molecules, it is not possible to determine whether the density is the result of two molecules or maybe three or even four molecules. Additionally, it is not possible to determine whether an individual density peak is the result of one or more molecules. Thus, given a density map, a scalar map, of **Fig. 1A** or **1B,** the problem may be formuled as finding the locations of the water molecules (the interaction sites) in the cavity, without prior knowledge about number of molecules that interact with the protein in the cavity.

As will be shown hereunder in greater detail, this problem may be reformulated as approximating a density map by a Gaussian mixture wherein each Gaussian is characterized by a mean (a location in a 2D or 3D map) and a variance. The problem of finding the water molecules in the protein cavity may then be reformulated as follows: given a scalar map $g$ in two or three dimensions (therefore $g \colon \mathbb{R}^2 \to \mathbb{R}$ or $g \colon \mathbb{R}^3 \to \mathbb{R}$ ), find $M$ Gaussian functions $\mathcal{G}(\mu_i, \sigma^2)$ (in two or three dimensions) with mean $\mu_1, ..., \mu_M$ and variance $\sigma^2$ such that the sum $\sum_{i=1}^{M} \mathcal{G}(\mu_i, \sigma^2)$ is an approximation *of g*. Hence, the density $g$ may be decomposed into a plurality of components of a Gaussian distribution as mentioned above, effectively using the Gaussian mixture for approximating the density. It is submitted however that for the embodiments in this application, mixtures of other densities, such as a Lorentzian distribution or a radial basis density function may also be used. Such distribution may be isotropic distribution or non-isotropic distribution.

Thus, a Gaussian $\mathcal{G}(\vec{\mu}, \sigma^2)$ may be used to describe individual components of the mixture, wherein the Gaussian is characterized by a mean $\vec{\mu}$ and variance $\sigma^2$. The possible values of the means of the Gaussians may be discretized according to a discrete grid of points $Q = \{\vec{q}_1, ..., \vec{q}_N\} \subset \mathbb{R}^3$ , e.g. square, triangular, hexagonal lattice, in space. Further, each point in the space may be associated with an occupation variable (a binary variable) $n_i \in \{0,1\}$ so that an arbitrary sum of Gaussians can be written as follows (equation 1):

$$\sum_{i=1}^{N} \mathcal{G}(\vec{q}_i, \sigma^2) n_i.$$

The value of each occupation variable $n_i$ act as a "switch" that indicates whether or not a Gaussian is place at

position $\vec{q}_i$. Then, the problem can be stated as finding the optimal assignment of $\{n_i\}_{i=1,...,N}$ and $\sigma^2$ such that a distance function $D$ is minimized.

For example, in an embodiment, the $L^2$ norm may be used as a distance. In that case, the expression to be minimized becomes (equation 2):

$$I^2 := \int_{\mathcal{C}} \left( g(\vec{r}) - \sum_{i=1}^{N} \mathcal{G}(\vec{q}_i, \sigma^2)(\vec{r}) \, n_i \right)^2 \, d\vec{r}$$

where $\mathcal{C}$ defines a volume (a subspace) of the discrete grid of points $Q$. In an embodiment, $\mathcal{C}$ may define a protein cavity encompassing a set of discete lattice points as shown in **Fig. 1C**.

Hence, in the embodiments of this disclosure, a computed or measured density $g$ may be approximated with a mixture of model density functions, such as Gaussian function or a Lorentzian function, which are arranged on a discrete grid of points. This problem may be be referred to as a mixture approximation problem or a k-means problem in which we look for the means of a plurality of model distributions (such as the Gaussian distribution function) that approximate a scalar density. In this scheme, to compare the model with the density function a similarity measure may be defined. In an embodiment, a Gaussian mixture approximation may be compared with a scalar density function based on a similarity measure such as the $L^2$ distance. In an embodiment, the square in equation 2 may be expanded so that $I^2$ defines the energy of a classical Ising model (equation 3):

$$I^2 = K - \sum_{i=1}^{N} \Gamma_i n_i + \sum_{i \neq j=1}^{N} V_{ij} n_i n_j$$

where $K$ is an unimportant constant. Thus, from the above, it follows that the problem of finding a mixture approximation for a scalar density can be transposed onto the problem of minimizing the energy of an Ising model. The coefficients of the linear and quadratic terms of equation 3 are given by the coefficients $\Gamma_i$ and $V_{ij}$ which may be defined as integrals over subspace $\mathcal{C}$ (equation 4):

$$\Gamma_i := 2 \int_{\mathcal{C}} g(\vec{r}) \, \mathcal{G}(\vec{q}_i, \sigma^2)(\vec{r}) \, d\vec{r} - \int_{\mathcal{C}} \left( \mathcal{G}(\vec{q}_i, \sigma^2)(\vec{r}) \right)^2 \, d\vec{r}$$

and (equation 5):

$$V_{ij} := \int_{\mathcal{C}} \mathcal{G}(\vec{q}_i, \sigma^2)(\vec{r}) \, \mathcal{G}(\vec{q}_j, \sigma^2)(\vec{r}) \, d\vec{r}$$

These coefficients may be computed numerically. It is however insightful to further examine the interaction term $V_{ij}$. When the Gaussians are concentrated far enough from the boundary of $C$, it is possible to extend the integration to the whole of $\mathbb{R}^3$. By performing the change of variables $\vec{r} \rightarrow \vec{r} + \vec{q}_i$, the term becomes the convolution of two Gaussians centered in zero, which is itself a Gaussian. In that case, the interaction term $V_{ij}$ can be approximated by an exponential term (equation 6):

$$V_{ij} \sim \exp\left( -\alpha |\vec{r}_{ij}|^2 \right).$$

wherein $\vec{r}_{ij} = \vec{q}_j - \vec{q}_i$. Thus, equation (3) thus represents a classical Ising model with exponentially decaying interactions. So

if $\{n_1^*, \ldots, n_N^*\}$ is the ground state of the Ising model, the Gaussian mixture approxiamtion is then given by a number of compontents $M := \sum_{i=1}^{N} n_i^*$ having positions on the grid corresponding to those $\vec{q}_i$ for which $n_i^* = 1$ (equation 7):

$$W = \{ \vec{q}_i \in Q \mid n_i^* = 1\}$$

Hence, as shown above, the inventors surprisingly found that the problem of finding a Gaussian mixture approximation can be formulated as Quadratic unconstrained binary optimization (QUBO) problem (equation 8):

$$\min_{n_i} - \sum_{i=1}^{N} \Delta_i \; n_i + \sum_{i,j=1}^{N} V_{ij} \; e^{-r_{ij}^2} \; n_i \, n_j$$

where $\Delta_i$ and $V_{ij}$ are integrals that can be calculated numerically (equation 4 and equation 5), and $r_{ij}$ is the distance between $p_i$ and $p_j$. The QUBO is a combinatorial optimization problem which is an *NP* hard problem and a problem class for quantum computing schemes, such as quantum annealing and variational quantum algorithms (VQAs).

A quantum computer comprising a qubit register is particularly suitable for finding an optimal global solution for combinatorial optimization problems such as the problem of approximating a density function based on a mixture of model distributions such as a Gaussian. For example, an array of atomic qubits or superconducting qubits may be used to fined optimal global solution to this problem.

To address this problem as a quantum problem, the quantum version of the Ising model may be determined by replacing the binary variable $n_i$ with the number operator $\hat{n}_i$, whose spectrum is {0,1}. In terms of Pauli matrices, the number operator may be defined as follows $\hat{n}_i = (\hat{\sigma}_i^z + 1)/2$. Taking the classical Ising model of equation (3) and performing the substitution $n_i \to \hat{n}_i$, the Hamiltonian of a system of interacting spins located in $\vec{q}_1, \ldots, \vec{q}_N$ is obtained (equation 9):

$$I^2 \to \hat{I}^2 := -\sum_{i=1}^{N} \Gamma_i \hat{n}_i + \sum_{i \neq j=1}^{N} V_{ij} \hat{n}_i \hat{n}_j$$

This Hamiltonian may be referred to as the problem Hamiltonian. The ground state of the problem Hamiltonian corresponds to the ground state of the classical Ising model of equation (3), but it is now seen as the vector $|e^*\rangle$ in the Hilbert space computation basis $\mathcal{B}(\mathcal{H})$ of the spin system that minimizes the expectation value of the problem Hamiltonian (equation 10):

$$|e^*\rangle := \underset{|e\rangle \in \mathcal{B}(\mathcal{H})}{\arg\min} \langle e| \hat{I}^2 |e\rangle .$$

The number *M* of components and the positions of the components may then be given by the following expressions (equations 11 and 12):

$$M := \sum_{i=1}^{N} \langle e^*| \hat{n}_i |e^*\rangle$$

$$W = \{\vec{w}_1, \ldots, \vec{w}_M\} := \{\vec{q}_i \mid \langle e^*| \hat{n}_i |e^*\rangle = 1\}.$$

It is noted that for certain problems the minimization of the Ising energy (as defined by equation 10) alone is not enough, and additional constraints may be taken into account.

For example, the general form of the problem of finding positions of N molecules, e.g. water molecues, in a protein based on a density function $g(\vec{r})$ as shown in **Fig. 1A** and **1B,** possible positions of molecules may be approximated by a Gaussian mixture wherein possible values of the means of the Gaussians are discretized according to a discrete grid of points as defined by equation (1). This way, the problem can be transformed into a minimization problem wherein a distance function $D$ is minimized under the constrained that that the distance between two water molecules is larger than some critical distance R. This critical distance may define a sphere in which two molecules cannot simultaneously present: $|\vec{w_i}-\vec{w_j}| > R \ \forall \ i,j$ (equation 13):

$$\begin{cases} \{\vec{w}_i^{best}\} = \arg\min_{\{\vec{w}_i\}} \ D(g(\vec{r}), \{\vec{w}_i\}) \\ \\ \text{subject to:} \ |\vec{w}_i - \vec{w}_j| > R \quad \forall \ i,j \end{cases}$$

Hence, the problem of finding molecules at an interaction sites in a protein cavity based on a density function may be mapped onto the problem of finding a Gaussian mixture that approximates the density function. This problem can be solved by determining the ground state of the problem Hamiltonian. A quantum computer comprising a qubit register is particularly suited for determining the ground state of the problem Hamiltonian. Although the embodiments hereunder are described based on a neutral atom quantum processor, other quantum processors based on other suitable hardware platforms such as superconducting qubits or trapped ion qubits may also be used.

In an embodiment, a quantum computer comprising a quantum register implemented based on an array of atomic qubits may be used to determine the ground state of the problem Hamiltonian.

An advantage of solving the protein hydration problem using such neutral atom quantum processor is that the neutral atom system evolves according to a Hamiltonian similar to the problem Hamiltonian, and the minimum distance constraint is automatically satisfied. The neutral atoms of the quantum computer may be addressed by optical signals of an optical laser system such that the state of the quantum processor evolves in time according to the so-called Rydberg Hamiltonian (equation 13):

$$\hat{H}(t) = \sum_{i=1}^{M} \Omega_i(t)\hat{\sigma}_i^x - \sum_{i=1}^{M} \Delta_i(t)\hat{n}_i + \sum_{i<j=1}^{M} U_{ij}\hat{n}_i\hat{n}_j$$

where $U_{ij}$ is the interaction coefficient between Rydberg excitations (equation 14):

$$U_{ij} = \frac{C_6}{r_{ij}^6}$$

and $C_6$ is a physical constant, and $r_{ij}$ is the distance between two atoms $r_{ij}=|\vec{q_i}-\vec{q_j}|$ wherein $\vec{q_i}$ is the position of atom *i.* Comparison of both Hamiltonians (9) and (13) shows that the Rydberg Hamiltonian is similar to the problem Hamiltonian except for the interaction term. The difference between the problem Hamiltonian and the Rydberg Hamiltonian resides in the coefficient of the interaction term, which in case of the Rydberg Hamiltonian $U_{ij}$ decays as a power-law, while in the problem Hamiltonian $V_{ij}$ decays exponentially.

The problem Hamiltonian of equation (9) does not directly encode the proximity constraint between neighboring excitations. In contrast the Van der Waals term, i.e. the $r^6$ term, of the Rydberg Hamiltonian intrinsically provides such proximity constraint. In particular, the Van der Waals interaction term of the Rydberg Hamiltonian forbids two neighboring atoms in the ground state $|00\rangle$ to be excited simultaneously, thus producing the superposition state $|01\rangle + |10\rangle$ instead. This is known as the Rydberg blockade mechanism, which is the main source of entanglement in neutral atom-based quantum computers. Hence, the solution provided by the neutral atom quantum processor will never provide solutions of water molecules positions that are located very close to each other. Such constraint is imposed by hand in classical approaches such as GAsol as described in the article by Fusani et al, Optimal water networks in protein cavities with GAsol and 3D-RISM, Bioinformatics, 34(11), 2018, 1947-1948.

In an embodiment, a neutral atom quantum processor, may be configured as a Rydberg quantum processor. In that case, each atom may represent a physical qubit associated with a number or occupation operator $\hat{n}_i$ having

eigenstates 10) and $|1\rangle$ wherein 10) is the ground state of the atoms, while 11) is a Rydberg state of an atom. By optically addressing an atom with a predetermined laser beam, a transition from the ground state 10) to the Rydberg state $|1\rangle$ may be initiated. This way, each atom effectively represents a qubit associated with a two-dimensional Hilbert space. The atomic system that is configured based on the Rydberg Hamiltonian, evolves in time according to the Schrödinger equation. The time-dependent coefficients $\Omega_i(t)$ and $\Delta_i(t)$ of the Rydberg Hamiltonian may be controlled using programmable control parameters of the quantum processor. Here, $\Omega_i(t)$ corresponds to Rabi frequency and $\Delta_i(t)$ corresponds to the detuning of the driving laser respectively that is used for addressing the atoms. After evolving the atomic qubits for a period of time $T$, the system can be measured in the computational basis using a known fluorescence imaging process for distinguishing atoms in the $|0\rangle$ state and in the excited Rydberg $|1\rangle$ state. The positions of the atoms in the Rydberg state $|1\rangle$ may be interpreted as the location of water molecules in the cavity.

Thus, the Rydberg Hamiltonian of the neutral atom quantum processor may be controlled based on parameters that can be externally controlled, using e.g. lasers and/or microwave control signals. In particular, the coefficients $\Omega_i(t)$ and $\Delta_i(t)$ of the Rydberg Hamiltonian may be controlled using the Rabi frequency and detuning of the driving laser respectively.

In an embodiment, the neutral atom quantum computer may be used as an analog quantum computer wherein the solution to a problem, such as the problem of determining interaction sites, may be determined using a quantum annealing scheme. The ground state of a Hamiltonian, such as the problem Hamiltonian, may be found by slowly evolving the ground state of a time-dependent Hamiltonian over a period of time $T$ from an initial Hamiltonian $H(0)$ to a final Hamiltonian $H(T)$, wherein $H(T)$ corresponds to the problem Hamiltonian or approximates the problem Hamiltonian

In an embodiment, the initial Hamiltonian $\hat{H}(0)$ may be based on the Rydberg Hamiltonian. For example, for the initial Hamiltonian the Rydberg Hamiltonian may be used wherein the coefficients are selected to be zero for all atoms (i.e. $\Omega_i(0) = \Delta_i(0) = 0$ for all $i$). This ground state $|0...0\rangle$ can be easily prepared experimentally. In another embodiment, the so-called equal superposition state may be used as the initial sate. The final Hamiltonian $H(T)$ may be based on the Rydberg Hamiltonian, wherein $\Omega_i(t') = 0$, $\Delta_i(t') = \Gamma_i$ approximates the problem Hamiltonian. In that case, each node of the problem Hamiltonian may have different weights determined by coefficients $\Gamma_i$ which can be computed classically.

The physical scale of the problem Hamiltonian (e.g. molecules in a protein cavity) and the Rydberg Hamiltonian (e.g. array of atomic qubits) may differ substantially. In that case, the original one-body coefficients $\Gamma_i$ may be related to the detunings $\Delta_i$ by a transformation of the type $\Delta_i = \alpha\Gamma_i + \beta$. The purpose of $\alpha$ is to rescale the units of the original problem to match those of the Rydberg Hamiltonian, while $\beta$ is a constant shift that could help in aligning the low-energy spectrum of the two Hamiltonians. The procedure presented below is not exact, but rather aimed at providing an efficient heuristic to find the best $\alpha$ and $\beta$ for a particular application.

The complexity in finding the ground state of the problem Hamiltonian (equation 9) lies in the competition between the one-body and two-body terms, where spins in 11) are energetically favoured by the one-body terms, but energetically disfavoured by the two-body terms. It is then reasonable to expect that the Rydberg Hamiltonian (equation 13) better approximates the low-energy spectrum of the problem Hamiltonian if the relationship between $\Gamma_i$ and $V_{ij}$ is well reproduced in the relationship between $\Delta_i$ and $U_{ij}$. This condition may be expressed in different ways (equation 14-16):

$$\sum_{i,j=1}^{m} \frac{\Gamma_i\Gamma_j}{V_{ij}} \approx \sum_{i,j=1}^{m} \frac{\Delta_i\Delta_j}{U_{ij}}$$

$$\sum_{i,j=1}^{m} \frac{V_{ij}}{\Gamma_i\Gamma_j} \approx \sum_{i,j=1}^{m} \frac{U_{ij}}{\Delta_i\Delta_j}$$

$$\sum_{i,j=1}^{m} \Delta_i\Delta_j V_{ij} \approx \sum_{i,j=1}^{m} \Gamma_i\Gamma_j U_{ij}$$

The quantity to be computed is the square of the logarithmic difference. Taking the second relation (equation 15) as an example, the logarithmic difference $T$ may be computed as (equation 17):

$$T(\alpha,\beta)^2 := \left[ \log\left| \sum_{i,j=1}^{m} \frac{V_{ij}}{\Gamma_i\Gamma_j} \right| - \log\left| \sum_{i,j=1}^{m} \frac{U_{ij}}{\Delta_i\Delta_j} \right| \right]^2$$

Minimizing $T$ will give an optimal solution for $\alpha$ and $\beta$. Based on these parameters the one-body coefficients $\Gamma_i$ may be transformed into one or more control signals (for example one or more optical detuning signals $\Delta_i$) for locally controlling qubits of a quantum register.

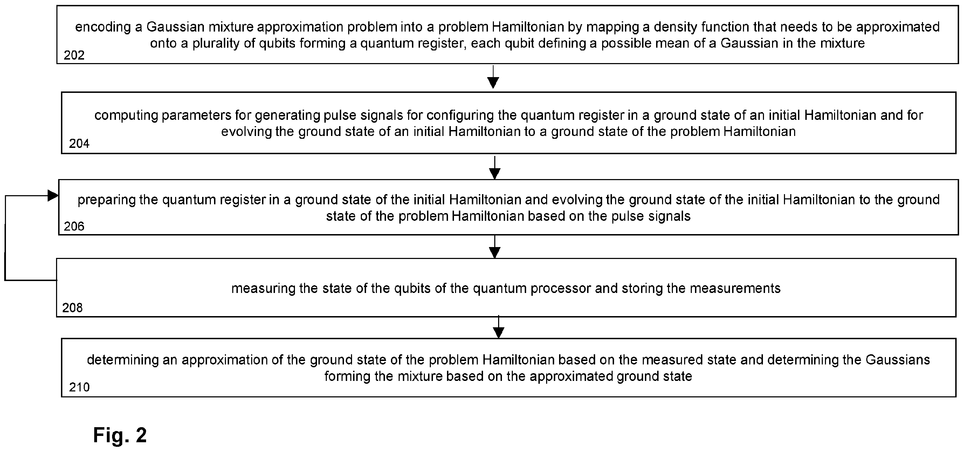

**Fig. 2** depicts a method of approximating a density function based on a Gaussian mixture according to an embodiment. In particular, the figure depicts a flow chart of a method of approximating a density function based on a Gaussian mixture using a quantum computer executing a quantum annealing scheme. In that case, the quantum computer may be configured as a quantum annealer. The quantum annealer may be controlled by a classical computer which is configured to encode the problem into a problem Hamiltonian and to compute parameters for generating signal pulses for executing the quantum annealing scheme.

Hence, the method may include encoding a Gaussian mixture approximation problem, e.g. a k-means problem, into a problem Hamiltonian (step **202**). The encoding may include mapping the density function that needs to be approximated onto a plurality of qubits forming a quantum register wherein each qubit defining a possible mean of a Gaussian in the mixture. The method may also comprise computing parameters for generating pulse signals for configuring the quantum register in a ground state of an initial Hamiltonian and for evolving the ground state of an initial Hamiltonian to a ground state of the problem Hamiltonian (step **204**). The laser pulses may be used to prepare the quantum register in a ground state of the initial Hamiltonian and evolve the ground state of the initial Hamiltonian to the ground state of the problem Hamiltonian based on the pulse signals (step **206**).

Thereafter, the state of the qubits of the quantum processor may be measured (step **208**). If the laser parameters that govern the time evolution of the neutral atoms are set correctly, the system will find itself in a final state where with high probability only the atoms close to the means of the actual Gaussians will be measured in the excited state $|1\rangle$, while the others will remain in the ground state $|0\rangle$. Thus, the measurement may include determining a bitstring wherein each bit in the bitstring represents a qubit of the quantum register. A qubit may be in a first state or a second quantum state, wherein the first state of the qubit may be represented by a first binary value (e.g. "1") and the second state of the qubit may be represented by a second binary value (e.g. "0"). The measured bitstring may be stored in a memory. The initialization and evolution of the quantum register as explained with reference to steps **206** and **208** may be repeated N times to determine a set of measurements that allows to determine the ground state of the problem Hamiltonian or at least an approximation thereof (step **210**) with sufficient accuracy.

Hence, as described above, a quantum register may be initialized into an initial Hamiltonian and slowly controlled to evolve the initial Hamiltonian into the problem Hamiltonian. The annealing process may be controlled based on tunable parameters of the problem Hamiltonian, in particular the coefficients $\Gamma_i$ of the problem Hamiltonian. These tunable parameters may be computed and includes the computation of detuning parameters $\Delta_i(t)$ which may be used to generate optical pulse signals for optically addressing the qubits during annealing. A data acquisition system is used to measure the states of atoms of the quantum processor. In particular, the classical computer may determine a trial solution to the computational problem based on the measured information and verify the quality of the trial solution. For *NP* problems, the verification is a computation which can be carried out in polynomial time, and can typically be easily computed. This process may be repeated until a satisfactory solution to the computational problem is found.

In an embodiment, the quantum register may be implemented based on a spatial arrangement, e.g. an array, of atomic qubits may be used to determine the ground state of the problem Hamiltonian. In a further embodiment, the quantum computer Hamiltonian may be a Rydberg Hamiltonian, wherein atomic qubits may be in the Rydberg state or in the ground state. In an embodiment, an atomic qubit in the Rydberg state may represent a mean of a Gaussian in the Gaussian mixture.

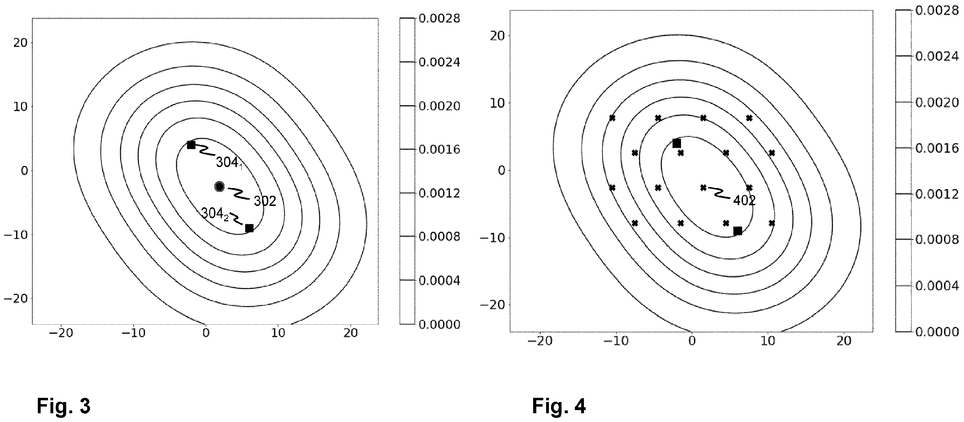

**Fig. 3-6** illustrate a simple example of an annealing scheme as described with reference to **Fig. 2** using such atomic qubit quantum register. The Gaussian mixture approximation problem may relate to the approximation of a density function as illustrated in **Fig. 3,** which has a maxium at the position of the black dot **302**. The problem may be formulated as finding a Gaussian mixture using the quantum computer which approximates the given density function. In this case, the theoretical solution of the problem is given by two Gaussians wherein the position of the mean is given by the black boxes **304₁,₂**.

**Fig. 4** shows the mapping of the density function onto an arrangement of qubits as denoted by the crosses (for clarity only a limited number of qubits are illustrated). The atomic qubits represent potential candidates for the position of the Gaussians. Although simple, this example is interesting because the density function only has a single peak which coincides with the position of qubit **402**.

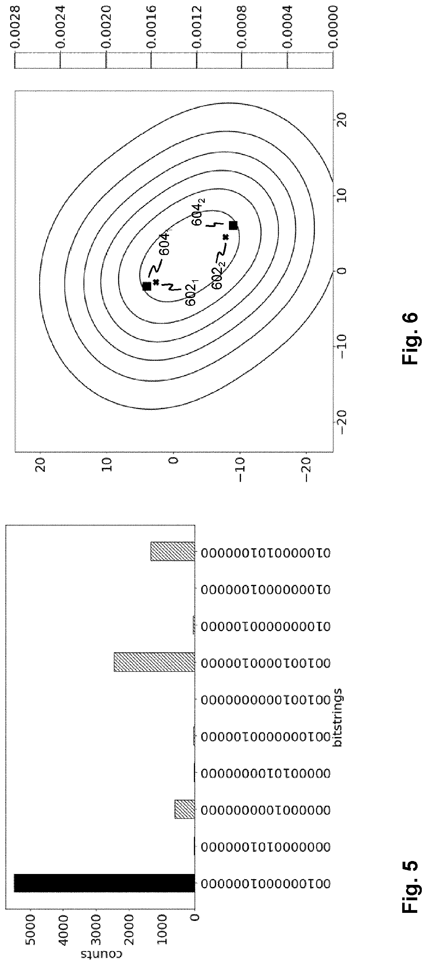

The problem Hamiltonian may be expresses as a Rydberg Hamiltonian as described with reference to equation (13) and the associated coefficients as expressed by equations (4) and (5). Execution of the annealing scheme as described with reference to **Fig. 2** and sampling of the final state after evolution of the state of the atomic qubits gives the best estimate of the means of the Gaussians. The sampling results of **Fig. 5** show a black bar representing a measured configuration of qubit states (i.e. qubit 2 and 9 in the Rydberg state) that has the highest probability and some further bars that represent measured configurations of qubit states of lower probability.

The qubit configuration that has the highest probability represents the best solution to the Gaussian mixture approximation problem. This solution is schematically illustrated in **Fig. 6**. The figure shows that the locations of qubit 2 **602₁** and qubit 9 **602₂** are good approximators for the means **604₁,₂** of the Gaussian mixture known from the theoretical solution (as shown in **Fig. 3**). The results show that that method allows resolving the two separate Gaussians even if their peaks have merged in a single one, which is not trivial. Moreover, although qubit 2 and 9 are somewhat displaced from the actual means of the Gaussians, but the method is still able to resolve them as the best candidates.

The above-described quantum annealing approach requires locally (individually) addressing the atoms of the neutral atom processor, which may be problematic for quantum registers comprising a very large number of atoms.

In a further embodiment, instead of the Rydberg Hamiltonian as defined by equation (13), a global Rydberg Hamiltonian may be used, wherein the coefficients $\Omega$ and $\Delta$ are no longer local parameters, but global parameters (equation 18):

$$\hat{H}(t) = \frac{\hbar\Omega(t)}{2}\sum_{i=1}^{M}\hat{\sigma}_i^x - \hbar\Delta(t)\sum_{i=1}^{M}\hat{n}_i + \sum_{i<j=1}^{M}\frac{C_6}{r_{ij}^6}\hat{n}_i\hat{n}_j.$$

Thus, when using the global Rydberg Hamiltonian, one or more global laser pulses acting in the same way on every individual atom (i.e. global addressing) may be used to evolve the atomic quantum processor to a ground state. In general, there is insufficient overlap between the low-energy spectrum of the problem Hamiltonian and the low-energy spectrum of the global Rydberg Hamiltonian. Hence, when only global addressing is available, an annealing scheme as described with reference to **Fig. 3** cannot be used.

To overcome this problem, a hybrid quantum-classical variational algorithm may be used which is configured to finding the global parameters $\Omega(t)$ and $\Delta(t)$ that maximize the overlap between the quantum state obtained at the end of time evolution and the ground state of the problem Hamiltonian. Hence, in this embodiment, a hybrid quantum classical formulation of the problem can be used to define the problem as an optimization problem, for example an argmin problem.

For example, in an embodiment, a Bayesian search routine may be used wherein the quantum evolution to reach $|\psi_T\rangle_k, k = 1, ..., n_c$ is repeated $n_c$ times to explore paths in the $\Omega$-$\Delta$ plane. At the end of the $k$-th repetition, the resulting state $|\psi_T\rangle_k$ may be measured several times and the bitstring $|b_i\rangle_k$ may be recorded that best minimize a scoring function score ($\langle b_i|\hat{l}^2|b_i\rangle_k$). At the end of the $n_c$ cycles, a histogram of the bitstrings $|b_i\rangle$ may be generated to finally extract the expected one with highest probability of occurrence.

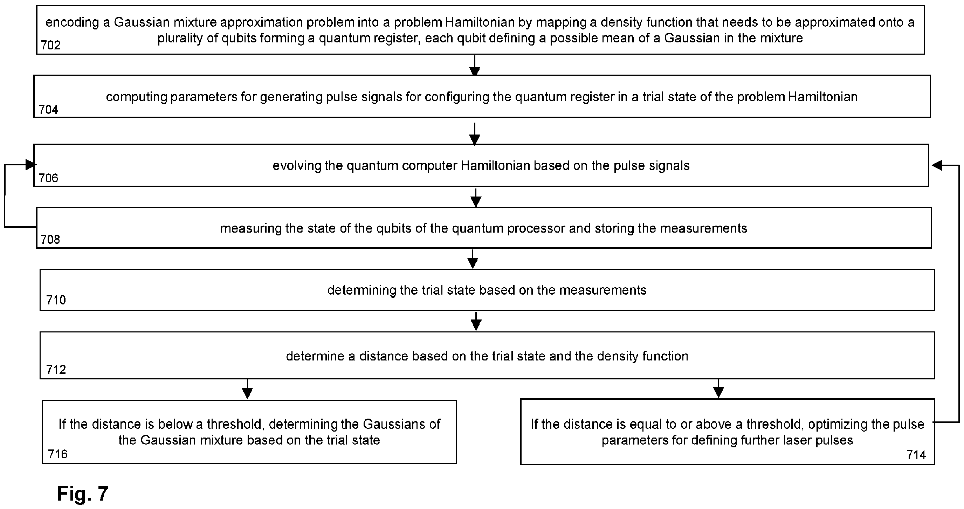

Fig. 7 schematically depicts a method of approximating a density function based on a Gaussian mixture according to an embodiment. In particular, the figure depicts a flow diagram of a method a method of approximating a density function based on a Gaussian mixture using a quantum variational algorithm. The method may include encoding a Gaussian mixture approximation problem into a problem Hamiltonian, each qubit defining a possible mean of a Gaussian in the mixture (step **702**). In an embodiment, the problem Hamiltonian may be based on the Rydberg Hamiltonian, for example a global Rydberg Hamiltonian, wherein the coefficients $\Omega$ and $\Delta$ are no longer local parameters, but global parameters.

The encoding may include mapping a density function that needs to be approximated onto a plurality of qubits forming a quantum register, wherein each qubit may define a possible mean of a Gaussian in the mixture. Further, parameters may be computed to generate pulse signals for addressing the qubits of the quantum processor (step **704**). The pulses may be determined to configure the qubits of the quantum processor in a trial state of the problem Hamiltonian. Further, the pulse signals may be used to evolve the quantum computer Hamiltonian based on the pulse signals (step **706**)..

The state of the qubits in the quantum register may be measured (step **708**) using a suitable imaging scheme. Similar to the method described with reference to **Fig. 2,** the measurement may include determining a bitstring wherein each bit in the bitstring represents a qubit of the quantum register. Here, a qubit may include a first and second state, wherein the first state of a qubit may be represented a first binary value (e.g. "1") and the second state of the qubit may be represented by a second binary value (e.g. "0"). Further, the measured bitstring may be stored in a memory. The measured bitstring may be stored and the evolution and measurement of trial states of the quantum computer Hamiltonian (produced by the pulse signals) as explained with reference to steps **706** and **708** may be repeated $N$ times to determine a set of measurements that can be used to determine a final trial state (step **710**) with sufficient accuracy.

A distance representing a similarity metric may be determined based on the final trial state and the density function (step **712**). The final trial state may include a set of qubits in the quantum register that are either in athe first state or the second. Each excited atom may be associated with a Gaussian distribution so that the sum of the Gaussians may form a density function that can be compared with the target density function of the hydrated protein. The distance may define a metric for determining the similarity (or overlap) between the two functions. A threshold value may be determined if the two functions are sufficiently similar. Hence, if the distance is equal to or above this threshold, then the pulse signals may be optimized to define new pulse signals for configuring the quantum register in a new trial state (step **714).** This new trial state can be measured and evaluated based on the distance in a similar way as described above. This process may be repeated until the distance is below the threshold. In that case, the optimized trial state may be used to determine the position of the water molecules (step **716).**

In an embodiment, the quantum register may be implemented based on a spatial arrangement, e.g. an array, of atomic qubits. This quantum register of atomic qubits may be used to determine the ground state of the problem Hamiltonian. In a further embodiment, the problem Hamiltonian may be a global Rydberg Hamiltonian, wherein atomic qubits are globally addressed. In that case, an atomic qubit may be in a first quantum state, the Rydberg state, or in a second quantum state, which is not a Rydberg state. The Rabi frequency $\Omega$ and detuning of the driving laser $\Delta$ for globally addressing the atomic qubits may be used to control the Rydberg Hamiltonian of the quantum processor. In an embodiment, an atomic qubit in the Rydberg state may represent a mean of a Gaussian in the Gaussian mixture.

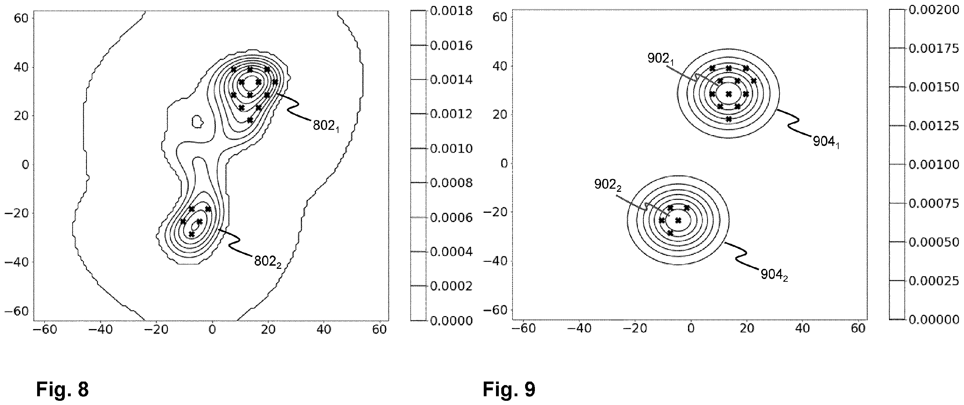

**Fig. 8** schematically depicts mapping regions $802_{1,2}$ of a 2D density function onto a 2D lattice of qubits, e.g. atomic qubits, of a quantum register illustrated by the crosses in the density. For clarity reasons only a limited number of qubits are illustrated. The illustrated qubits may be selected to represent potential candidates for the position of a Gaussian, in particular the position of the mean of the Gaussian. If the control parameters that control the time evolution of the qubits are set correctly, there is a high probability that the system evolves to a state wherein qubits that are close to the most probable position of a mean of a Gaussian will be in state 11), while the other qubits remain in the ground state 10). Thus, when measuring for example a final state $|00101\rangle$ a bitstring 00101 may be produced representing a configuration of Gaussians at different sites of the qubit grid wherein a Gaussian may be positioned - in this example - at the position of the third and fifth neutral atom.

As explained above, atomic qubits, i.e. qubits based on neutral atoms, are particularly suited for determining an approximation of a density function using a Gaussian mixture. For example, if the Gaussian mixture problem relates to possible positions of water molecues in a protein cavity, atomic qubits are particularly suited because there is a minimal physical distance between molecules. For water molecules this distance is given approximately by the average length of a hydrogen bond. Rydberg excitations in a atomic qubit quantum register follow a similar constraint, wherein two atoms too close to each other cannot be excited simultaneously because of the Rydberg blockade.

The optimal control parameters $\Omega$ and $\Delta$ for the evolution of the quantum system can be found in different ways. Typically, the Hamiltonian of the quantum system may be associated to a cost function representing the problem, with the optimal parameters of the Hamiltonian being the ones that minimize the cost function. In an embodiment, such a cost function may be based on comparison of the original distribution with a Gaussian mixture returned by the quantum evolution of the quantum register. The different nature of the two objects (the original distribution function is a continuous map while the interaction sites are represented by a discrete list of positions) makes the comparison non-trivial. To make this comparison possible, in an embodiment, a model distribution function, e.g. a Gaussian, may be placed around each excited atom to form a mixture of Gaussians. This way, the distance metric is based on a comparison between the density function and a mixture of Gaussians.

For example, an evolution of the qubits based on a density function of **Fig. 8** may yield a bitstring: 0100000010000000, indicating a position of a mean of a first Gaussian close to qubit 2 and a position of a mean of a second Gaussian close to qubit 9. The Gaussian mixture related to that bitstring is depicted in **Fig. 9,** which is constructed by placing a Gaussian $904_{1,2}$ around the second and ninth qubit $902_{1,2}$. For a certain value of the control parameters $\Omega$ and $\Delta$, the result of measuring ten times the system in **Fig. 8** may yield the following samples:

| measurement | state | frequency |
| --- | --- | --- |
| 1 | 0100000100010000 | 3 |
| 2 | 0100000010000000 | 3 |
| 3 | 0100010000100000 | 2 |
| 4 | 0100000000100000 | 1 |
| 5 | 0100010000010000 | 1 |

A certain score associated with parameters $\Omega$ and $\Delta$ may be used to define a distance between the original density functioin and the distribution defined by the Gaussians, for example a weighted average of the Gaussian mixture, associated to the sampled bitstrings. The weight of each Gaussian mixture may be given by the frequency with which that bitstring was sampled. This score may be used as an objective function that can be minimized using a minimization scheme, e.g. a Bayesian minimization scheme, to select good parameters $\Omega$ and $\Delta$.

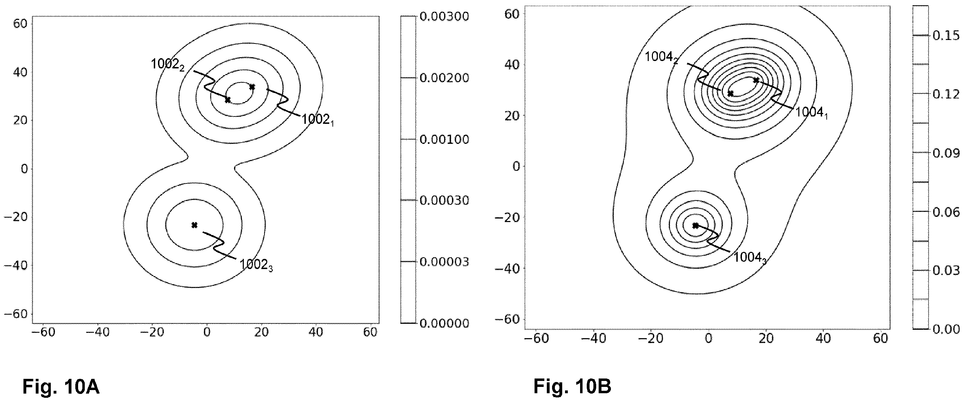

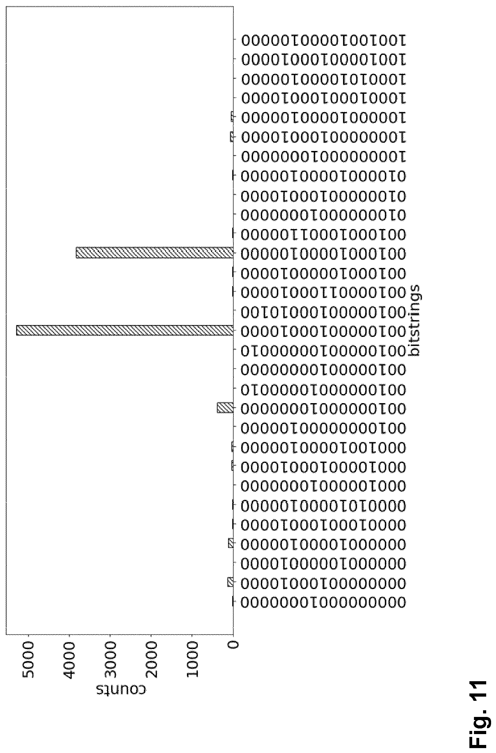

Applying this scheme to the density of **Fig. 8** using a limited number of qubits ($N$ = 17) already provides good results. **Fig. 10A** and **10B** show a density function and locations of three model density functions. In particular, **Fig. 10A** depicts a density function formed based on three Gaussians $1002_{1-3}$ which were obtained based on a Bayesian search of the optimal Hamiltonian parameters as explained above. Similarly, **Fig. 10B** depicts a density function formed based on three Lorentzians **1004$_{1-3}$** which were obtained based on a Bayesian search of the optimal Hamiltonian parameters as explained above. As shown in these figures, the resulting mixtures nicely approximates the original density of **Fig. 8. Fig. 11** depicts a histogram of states that were sampled during the process. The most sampled state 0100000100010000 corresponds to the best solution to the problem. This result also clearly illustrates that it is not possible to derive the location of the interaction sites solely based on the density of **Fig. 8.**

The embodiments may be used to approximate continuous densities (in two or three dimensions) based on a finite mixture of model densities, such as a Gaussian or a Lorentzian, wherein the means of the model densities are positioned on a grid of points that may coincide with the arrangement of the qubits of the quantum register. The density function may include a continuous scalar map. In another embodment, the density function may include a data set, e.g. a set observations or sensor measurements, that are assumed to be a mixture of several independent distributions are partitioned in different clusters. The approximation of a density by a mixture of model density function, such as a Gaussian, may have different applications. For example, it may be used to determine placement of water molecules inside protein cavities from their density distribution. Another application in chemistry relates to structure refinement of electron density maps obtained by x-ray chrystallography. Yet another application may include clustering of data, e.g. observations or sensor data, which is in imaging segmentation, urban planning, sentiment analysis in natural language processing, etc. For example, mixture models can be used to efficiently estimate tissue types in CT scans. Each pixel of a CT scan represents the density of the tissue in that area, and different values of density are related to different tissue type. Borders between different tissues are generally not well-resolved, and Gaussian mixture models have been used successfully to increase the accuracy in estimating tissue types across problematic areas (see for example Kerrie L. Mengersen et al. Mixtures: Estimation and Applications, Wiley, 978-1-119-99389-6, May 2011).

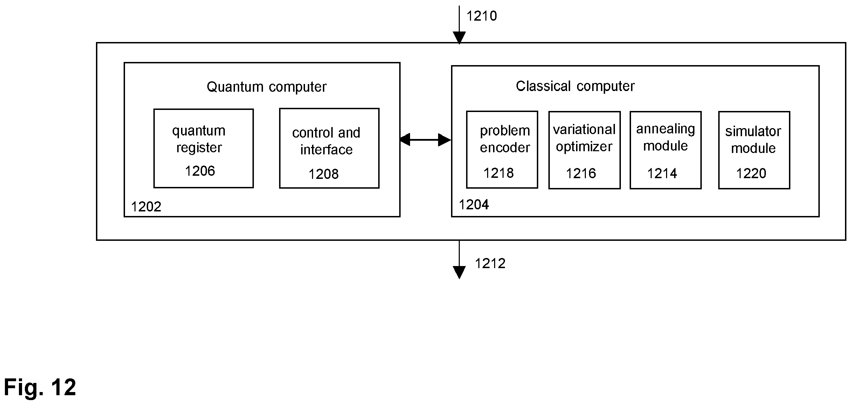

Generally, the schemes described in this application may be executed by a hybrid computer system as depicted **in Fig. 12.** Such hybrid computer system may comprise a classical computer **1204** comprising one or more classical processors (CPUs and/or GPUs) and a quantum processor **1202** comprising a quantum register **1206** comprising plurality of interacting quantum elements, e.g. qubits or qudits, that can be controlled by the classical computer. Here, the qubits may be implemented based on different types of technologies, including but not limited to superconducting qubits, quantum dot qubits, neutral atom type qubits, optical qubits, etc.

The quantum processor may be controlled via a controller system **1208** comprising input output (I/O) devices which form an interface between the quantum processor and classical computer. The controller system may include a system for generating control signals for controlling the quantum processing elements. The control signals may include for example pulses, e.g. microwave pulses, voltage pulses and/or optical pulses, for manipulating the qubits, e.g. bringing them in an initial state and manipulating the state of the qubit and/or the interaction (coupling) between two or more qubits. Further, the controller may include a data acquisition system for readout of state of the quantum processing elements. Hence, the data acquisition system may receive an output signal originating from the quantum processor in response to a readout pulse for reading the state of a quantum element. In some embodiments, at least a part of the data acquisition system may be located or integrated with the chip that includes the qubits.

The classical computing system may include different modules for enabling execution of programs, in particular quantum annealing algorithms and variational quantum algorithms, to be executed on the quantum processor. To that end, the classical computer may include a problem encoder **1218** configured to receive a computational problem such as the protein hydration problem and to encode the problem into a problem Hamilton of the quantum processor. Additionally, the classical computer may include a variational optimizer module **1216** for executing variational quantum algorithms and/or an annealing module **1214** for executing quantum annealing schemes.

The classical computer may include an emulator module **1220** to emulate classically the quantum dynamics. The emulator module may include exact solvers like state vector, Schrodinger equation and master equation solvers, for exact emulation of a limited number of qubits. The classical emulator may also include approximate solvers like tensor network algorithms and/or deep neural networks to approximately emulate the dynamics of a limited number of qubits.

The problem Hamiltonian may be an Ising-type Hamiltonian or a Rydberg type Hamiltonian based on Pauli operators acting on a k-th qubit of the qubits of the quantum processor. The problem Hamiltonian may also include one or more adjustable parameters which can be controlled by external electromagnetic control signals, e.g. electro-magnetic, optical and/or magnetic fields and/or pulses, which may be used to locally and/or globally adjust the electromagnetic or magnetic environment at one or more qubits. A plurality of such adjustable external control signals may be used to control a single qubit or a part of the plurality of qubits.

By adjusting the external control signals, these parameters may be adjusted depending on the computational problem. Encoding the computational problem into the problem Hamiltonian, as performed by the classical computing system, includes determining, from the computational problem, a configuration for the plurality of adjustable parameters. For each of the adjustable parameters may be determined depending on the computational problem.

The controller system may include a data acquisition system configured to measure the states of at least part of the qubits of the quantum processor, wherein the measured information may include at least part of the solution to the problem that is encoded in the problem Hamiltonian. In particular, the classical computer may determine a trial solution to the computational problem based on the measured information, and verify if the trial solution actually is a solution to the computational problem. For NP problems, the verification is a computation which can be carried out in polynomial time, and can typically be easily computed. This process may be repeated until a solution to the computational problem is found.

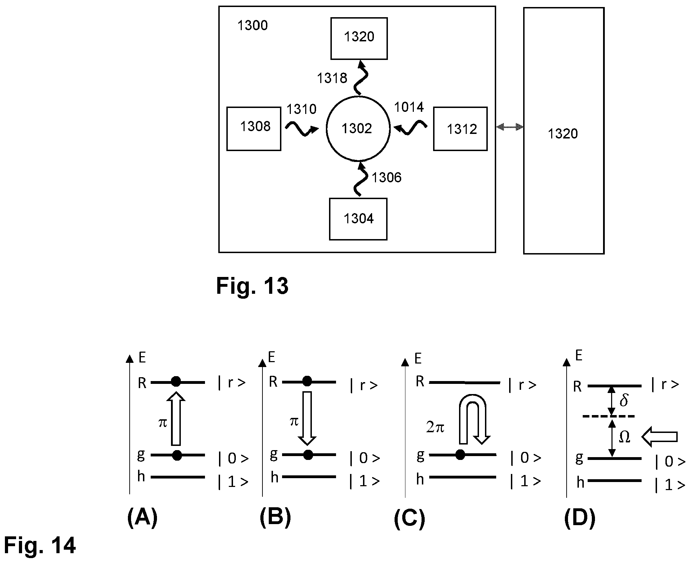

One particular advantageous hybrid computer system for implementing and executing schemes described in this application, is a neutral atom quantum processor based on configurable arrays of single neutral atoms (also referred to as a neutral atom register). **Fig. 13** schematically describes an example of such neutral atom quantum processor. In particular, the figure depicts a high-level schematic of a neutral atom quantum processor **1300** (quantum processor) which is controlled by a classical computer **1320** and which is configured to execute the quantum circuits as described with reference to the embodiments in this application.

The quantum computer may include a chamber **1302** that accommodates a plurality of neutral atoms. The atoms may be of the same element, and thus are, from a chemical standpoint, identical when no external interactions are imposed upon them. The atoms may be unbound to other atoms in the group, for example, by being in a gaseous matter state. Particular suitable atoms that can be used as qubits and which are suitable for trapping, positioning and atomic-state-manipulating may include (but not limited to) Rubidium or Cesium or Strontium (Alkali, Alkaline Earth, ...).

To control the quantum processor to execute operations, it may include different control and readout modules as shown in the figure. In particular, the quantum processor may include amongst others a trapping system **1304** configured to trap atoms in a particular spatial arrangement within the chamber, an atom positioner **1308** configured to controllably move one or more trapped atoms from one spatial position to another spatial position, an atomic state actuator **1312** or in short an actuator configured to generated optical control pulses to control and manipulate the atomic states of atoms in the chamber, and a detector **1320** configured to detect and capture optical signals **1318** transmitted by the atoms in the chamber. The detector may comprise a camera to image the fluorescence output by the atoms held by the holding system.

The trapping system **1304** may be configured to trap atoms in a particular spatial arrangement. In particular, the trapping system may be configured to position (trap) each atom of the group of atoms at a particular position in the chamber such that they form a predetermined spatial arrangement in which atoms are isolated from each other if they are in a non-excited state, while atoms within a certain region may interact if they are in an excited state. Hence, the term 'isolate' in this context means that an atom in a non-excited atomic state does not interact with a neighbouring atom of the same group. However, if the atoms are stimulated using, for example, an electromagnetic signal such as a laser pulse, they may be brought into an excited state, in which the atoms may interact with each other based on quantum mechanical effects such as (but not limited to) the Rydberg blockade.

The trapping system may be configured to trap one atom at each site so that a spatial arrangement of single atoms is formed wherein each atom forms a multi-level quantum system that can be used as a qubit. In another embodiment, the trapping system may be configured to configured hold multiple atoms, e.g. two or three, at each site. Each set of multiple atoms may form a multi-level quantum system that can be configured as a qubit (or a qudit).

The trapping system may be configured to maintain the atoms in their stationary positions using different mechanisms including, but not limited to, magnetically traps and optical traps. The trapping system may be configured to generate a pattern of spatially separated traps so that a particular spatial arrangement of atoms in the chamber can be realized. The trapping pattern may be an array of regular or irregular spaced traps. The trapping patterns may include 1D, 2D (insofar that the traps in the pattern all align along one plane) or 3D patterns of traps. For example, the trapping system may generate a 3D array of traps spaced periodically in the X, Y and Z dimensions to form a 3D grid. Other patterns are also possible. The spacing in one spatial dimension may be the same or different to the other spatial dimensions.

The trapping system may provide a plurality of trapping sites wherein, when the trapping system is first activated some trapping sites may be filled by one or more atoms whilst other trap sites are vacant. Preferably the trapping system may be configured to generate trapping sites that hold a single atom. The trapping system may use electromagnetic signals **1306,** such as optical trapping signals to generate the optical traps in the chamber.

The atom positioner **1308** may be configured to controllably move one or more held atoms from one spatial position to another spatial position. For example, in an embodiment, the atom positioner may include one or more optical tweezers configured to use optical signals **1310** to move one or more trapped atoms in one of the trapping sites to another trapping site. Different technologies may be used to manipulate the position of the atoms including, but not limited to, moving the atoms using magnetic signals or electromagnetic signals such as optical signals.

The atomic state actuator **1312** may be configured to generate optical pulse signals to control and manipulate the atomic states of atoms in the chamber (in other words it "actuates" the transition between atomic states). The optical pulse signal 1314 may include single or multiple photon signals. Different optical pulse signals may be output by the atomic state actuator including optical pulse signals at different wavelengths. Each wavelength may correspond to (i.e.,

be resonant with) a different atomic transition. Typically, the quantum processor may comprise multiple atomic state actuators. For example, a first atomic state actuator may output a first wavelength or first set of wavelengths which are different from the wavelength or set of wavelengths outputted by a second atomic state actuator. The atomic state actuator may facilitate the transition between atomic states of a single trapped atom or a plurality of trapped atoms. The wavelengths may be selected based on the atoms in the chamber. The excitation from the ground state to the Rydberg state may be facilitated by two-photon absorption. This may be accomplished using two different EM sources such as lasers or other EM sources. These two EM sources may have different wavelengths. For example, optical control pulses of 495 nm may be used for exciting a Rubidium atom to the Rydberg state and optical control pulses of 795 nm to induce transitions between the hyperfine states.

Suitable signals for trapping and moving the atoms are preferably different, at least in wavelength, to the signals used to manipulate the quantum states of the atoms. In particular, signals for trapping and moving the atoms may be off-resonance, i.e., the wavelength of the optical signals for trapping and positioning an atom cannot excite the atom between its different atomic states.

An example of the general operation of the quantum processor may include one or more of the following steps.

1) Using the trapping system to generated optical trapping signals to create a plurality of traps in the chamber so that atoms in the chamber are trapped.

2) Optionally using the atom positioner to manipulate, e.g. move, trapped atoms so that each trap of at least a predetermined set of traps can be filled with a single atom. Such set of single atom filled traps may be referred to as a 'register'. The detector may be used in this process to help identify which traps are occupied or vacant.

3) Using the atomic state actuator to generate predetermined optical control pulses **1314,** e.g. laser pulses of a predetermined shape, amplitude and duration to control the atomic states of atoms in the register. This step may be performed multiple times to implement processing operations of the quantum processor, for example, time-sequentially inputting a plurality of optical pulses that represent quantum logic gate operations.

4) Using the detector to detect and image florescent signals emitted by the atoms and using the imaged signals to determine the atomic states of the atoms.

These steps may represent a quantum computation by the quantum processor. The quantum processor may be reset by removing the traps and re-initialised for a further quantum computation by repeating steps 1-4 above.

**Fig. 14A-14D** depict implementations of quantum spin models using neutral atoms. In particular, **Fig. 14A-14C** schematically show three levels of the atomic system of the rubidium atoms used herein wherein: the energy levels 'g' and 'h' denote the hyperfine states that represent the $|0\rangle$ and $|1\rangle$ qubit states respectively, whilst 'R' represents the Rydberg state of the atomic system and is associated with quantum state $|r\rangle$. The label of '$\pi$' in **Fig. 14A** and **14B** is shown when a single transition is made between the g and R state indicating that a $\pi$ phase change has been imparted into the atomic system because of the overall transition.

When a laser field of sufficient duration and amplitude has been imparted onto the atom to resonantly transition it from the g energy level up to the R energy level and then back to the g energy level (within the same control field input), this is labelled as '2$\pi$' indicating that a 2$\pi$ phase change has been imparted into the atomic system because of the overall transition. The laser fields that give rise to these $\pi$ and 2$\pi$ transitions may be respectively referred to as a $\pi$-pulse and a 2$\pi$-pulse. It is understood that the input control fields causing these transitions have a wavelength resonant with the $|0\rangle$ to $|r\rangle$ transition and not resonant between the $|0\rangle$ and $|1\rangle$ transition. **Fig. 14A** shows the atomic transition from the g level to the R level with a $\pi$-pulse. **Fig. 14B** shows the atomic transition from the R level to the g level with a $\pi$-pulse. **Fig. 14C** shows the atomic transition from the g level to the R level and back to the g level again with a 2$\pi$-pulse.

**Fig. 14D** depicts a near-resonant laser pulse of amplitude $\Omega$ exposing an atom. The frequency of the laser pulse is detuned from the transition frequency between the ground state $|g\rangle$ and a Rydberg state $|r\rangle$ by a small (with respect to the transition frequency) detuning $\delta$. The amplitude $\Omega$ of the pumping laser determines the transverse-field term in the Ising model, and the detuning to resonance $\delta$ induces a longitudinal-field term. Additionally, the global phase of the laser can be tuned in order to control the axis of rotation on the Bloch sphere induced by the transverse-field term. The pulse depicted in **Fig. 14D** represents a single gate operation defining a predetermined rotation over the Block sphere.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. Method for approximating a density function using a quantum computer comprising:

   encoding a problem of approximating a density function based on a mixture of components into a problem Hamiltonian, the encoding including mapping the density distribution onto a plurality of qubits of the quantum computer, each qubit being associated with a location in the density distribution and defining a possible location of the mean of a component of the mixture;
   computing parameters for generating one or more control signals for configuring the quantum computer in a state of the problem Hamiltonian;
   evolving the qubits of the quantum computer based on the control signals and measuring the state of the quantum computer; and,
   determining one or more candidate locations for the mean of the components based on the measured state.

2. Method according to claim 1 wherein the plurality of qubits include a spatial arrangement of qubits, preferably a 1D, 2D or 3D spatial arrangement of qubits.

3. Method according to claims 1 and 2 wherein a density component is a distribution model, preferably the distribution model being at least one of: a Gaussian distribution, Lorentzian distribution, a radial basis function, a isotropic model distribution function or anisotropic model distribution function

4. Method according to any of claims 1-3 wherein the one or more control signals are configured to set the quantum computer in an initial state and to evolve the initial state towards a final state, preferably a ground state or a low-energy state of the problem Hamiltonian.

5. Method according to any of claims 1-4 wherein the problem Hamiltonian is an Ising-type Hamiltonian or a Hamiltonian that approximates an Ising-type Hamiltonian.

6. Method according to any of claims 1-5 wherein the method further includes:

   constructing a distribution model, the construction including assigning a model distribution function to each of the one or more candidate positions;
   determining a similarity measure between the density distribution and the distribution model;
   optimizing the one or more candidate location of the means based on the similarity measure by updating the pulse parameters, evolve the qubits based on the updated parameters and measuring one or more updated candidate locations of the means.

7. Method according to any of claims 1-6 wherein a density function relates to a density function determined by crystallographic measurements or a density function determined by imaging methods, preferably tomographic, for example CT-scans, or crystallographic measurements, for example X-ray diffraction or Nuclear Magnetic Resonance (NMR).

8. Method according to any of claims 1-7 wherein a qubit is associated with a first state indicative of no presence of a component and a second state indicative of the presence of a component.

9. Method according to claim 8 wherein the qubits are atomic qubits, preferably an atomic qubit in a Rydberg state indicating the position of the mean of a component; and/or, wherein the quantum computer Hamiltonian is a Rydberg Hamiltonian.

10. Method according to any of claims 1-9 wherein the control signals are one or more laser pulses, preferably one or more local laser pulses for individually addressing an atomic qubit and/or one or more global pulses for collectively addressing a plurality of atomic qubits of the quantum computer.

11. Method according to any of claims 1-10 wherein the method comprises:
measuring the state of the atomic qubits in the computational basis using an imaging system, preferably the measured state of the atomic qubits forming a bitstring for encoding the one or more candidate locations for the means of the components.

12. Method according to any of claims 1-11 wherein the evolution of the qubits of the quantum computer are based on a quantum annealing scheme or based on a variational quantum algorithm.

13. A hybrid computing system for approximating a density function comprising
a quantum computer comprising a plurality of qubits, preferably a spatial arrangement of atomic qubits, forming a quantum register and a classical computer, wherein the system is configured to perform the steps of:

encoding a problem of approximating a desity function based on a mixture of components into a problem Hamiltonian, the encoding including mapping the density distribution onto a plurality of qubits of the quantum computer, each qubit being associated with a location in the density distribution and defining a possible location of the mean of a component of the mixture;
computing parameters for generating one or more control signals for configuring the quantum computer in a state of the problem Hamiltonian;
evolving the qubits of the quantum computer based on the control signals and measuring the state of the quantum computer; and,
determining one or more candidate locations for the means of the components based on the measured state.

14. A hybrid computing system according to claim 13, wherein the hybrid computing system is further configured to perform any of the steps according to claims 2-12.

15. A computer program or suite of computer programs comprising at least one software code portion, the software code portion, when run on a hybrid computing system comprising a plurality of qubits, preferably a spatial arrangement of atomic qubits, forming a quantum register and a classical computer, being configured for executing the method steps according to any of claims 1-12.

**Fig. 1A**

**Fig. 1B**

**Fig. 1C**

EP 4 451 181 A1

EP 4 451 181 A1

encoding a Gaussian mixture approximation problem into a problem Hamiltonian by mapping a density function that needs to be approximated onto a plurality of qubits forming a quantum register, each qubit defining a possible mean of a Gaussian in the mixture
202

computing parameters for generating pulse signals for configuring the quantum register in a ground state of an initial Hamiltonian and for evolving the ground state of an initial Hamiltonian to a ground state of the problem Hamiltonian
204

preparing the quantum register in a ground state of the initial Hamiltonian and evolving the ground state of the initial Hamiltonian to the ground state of the problem Hamiltonian based on the pulse signals
206

measuring the state of the qubits of the quantum processor and storing the measurements
208

determining an approximation of the ground state of the problem Hamiltonian based on the measured state and determining the Gaussians forming the mixture based on the approximated ground state
210

**Fig. 2**

**Fig. 4**

**Fig. 3**

**Fig. 5**

**Fig. 6**

EP 4 451 181 A1

| |
|---|
| encoding a Gaussian mixture approximation problem into a problem Hamiltonian by mapping a density function that needs to be approximated onto a plurality of qubits forming a quantum register, each qubit defining a possible mean of a Gaussian in the mixture<br>702 |

↓

| |
|---|
| computing parameters for generating pulse signals for configuring the quantum register in a trial state of the problem Hamiltonian<br>704 |

↓

| |
|---|
| evolving the quantum computer Hamiltonian based on the pulse signals<br>706 |

↓

| |
|---|
| measuring the state of the qubits of the quantum processor and storing the measurements<br>708 |

↓

| |
|---|
| determining the trial state based on the measurements<br>710 |

↓

| |
|---|
| determine a distance based on the trial state and the density function<br>712 |

↓

| | |
|---|---|
| If the distance is below a threshold, determining the Gaussians of the Gaussian mixture based on the trial state<br>716 | If the distance is equal to or above a threshold, optimizing the pulse parameters for defining further laser pulses<br>714 |

**Fig. 7**

Fig. 8

Fig. 9

EP 4 451 181 A1

**Fig. 10A**

**Fig. 10B**

Fig. 11

Fig. 12

**Fig. 13**

(A)　　　(B)　　　(C)　　　(D)

**Fig. 14**

EP 4 451 181 A1

Europäisches
Patentamt

European
Patent Office

Office européen
des brevets

# EUROPEAN SEARCH REPORT

Application Number

EP 23 30 5613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COLE MILES ET AL: "Machine learning discovery of new phases in programmable quantum simulator snapshots", ARXIV.ORG, CORNELL UNIVERSITY LIBRARY, 201 OLIN LIBRARY CORNELL UNIVERSITY ITHACA, NY 14853, 20 December 2021 (2021-12-20), XP091119196, * abstract * * page 1 - page 21 * ----- | 1-15 | INV. G06N10/60 |
| A | ARNOLD JULIAN ET AL: "Replacing Neural Networks by Optimal Analytical Predictors for the Detection of Phase Transitions", PHYSICAL REVIEW X, [Online] vol. 12, no. 3, 28 September 2022 (2022-09-28), XP093079054, DOI: 10.1103/PhysRevX.12.031044 Retrieved from the Internet: URL:https://journals.aps.org/prx/pdf/10.1103/PhysRevX.12.031044> [retrieved on 2023-09-05] * the whole document * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 6 September 2023 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 451 181 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DASGUPTA.** Learning mixtures of Gaussians. *40th annual symposium on foundations of computer science,* 17 October 1999
- **FUSANI et al.** Optimal water networks in protein cavities with GAsol and 3D-RISM,. *Bioinformatics,* 2018, vol. 34 (11), 1947-1948
- **KERRIE L. MENGERSEN et al.** Mixtures: Estimation and Applications. Wiley, May 2011